Europäisches Patentamt

European Patent Office

Office européen des brevets

(19)

(11) Numéro de publication: **0 399 896**
**A1**

(12) ## DEMANDE DE BREVET EUROPEEN

(21) Numéro de dépôt: 90401359.6

(22) Date de dépôt: 22.05.90

(51) Int. Cl.⁵: **B60K 20/02, G05G 9/04, H01H 25/00**

(30) Priorité: 23.05.89 FR 8906699

(43) Date de publication de la demande:
28.11.90 Bulletin 90/48

(84) Etats contractants désignés:
BE DE ES GB IT NL

(71) Demandeur: **RENAULT VEHICULES INDUSTRIELS**
**129 rue Servient "La Part Dieu"**
**F-69003 Lyon(FR)**

(72) Inventeur: **Ellul, Claude**
**2, Chemin des Rames**
**F-69120 Vaux en Velin(FR)**

(74) Mandataire: **Ernst-Schonberg, Michel**
**8/10, avenue Emile Zola**
**F-92109 Boulogne Billancourt(FR)**

(54) **Poignée contactante d'un levier de boite de vitesses.**

(57) Poignée contactante d'un levier de boîte de vitesses caractérisée en ce qu'elle comporte :
- un axe (1) rigide métallique solidaire du levier, et qui coopère avec une bague à linguets (15) métallique montée à son extrémité par l'intermédiaire d'un ensemble isolant laissant les linguets (22) libres radialement, ledit axe (1) étant monté dans un corps (23) en matière plastique ;
- un anneau mobile (19) monté sur l'axe (1) et qui est tenu axialement sur le corps (23) au moyen d'un pommeau (20) en matière plastique fixé à l'extrémité dudit axe (1) ;
- un ensemble de deux conducteurs électriques (24, 25) reliés respectivement audit axe (1) et à la bague à linguets (15) de manière que sous une action centripète du conducteur sur l'anneau mobile (19), celui-ci vienne appuyer sur les linguets (22) élastiques de façon à établir le contact entre lesdits linguets (22) et l'axe (1) afin de commander l'ouverture de l'embrayage, les linguets (22) pouvant se déplacer radialement d'une valeur égale à l'épaisseur de l'ensemble isolant.

FIG.1

## POIGNEE CONTACTANTE D'UN LEVIER DE BOITE DE VITESSES

La présente invention se rapporte à une poignée contactante d'un levier de boîtes vitesses de commande de l'embrayage d'un véhicule automobile notamment d'un véhicule industriel.

On connaît des poignées contactantes de commande de l'embrayage d'une boîte de vitesses, qui sont articulées de manière à assurer le contact nécessaire à l'embrayage ou au débrayage. Ces types de poignées contactantes présentent l'inconvénient d'avoir une articulation, qui entraîne une imprécision sur le passage des rapports. De plus, le conducteur du véhicule ne peut pas laisser sa main au repos sur la boule ou le pommeau de la poignée contactante, car il peut y avoir ouverture de l'embrayage en cas de légère pression intempestive due aux chaos de la route, à la distraction du chauffeur ou même aux vibrations du véhicule.

Afin d'éviter cet inconvénient, il peut être prévu une commande beaucoup plus dure, qui est alors désagréable à la conduite et qui peut poser en endurance un problème de rupture de soudure de fils.

Selon un mode de réalisation de l'invention, la poignée contactante d'un levier de boîte de vitesses comporte :
- un axe rigide métallique solidaire du levier, et qui coopère avec une bague à linguets métallique montée à son extrêmité par l'intermédiaire d'un ensemble isolant laissant les linguets libres radialement, ledit axe étant monté dans un corps en matière plastique ;
- un anneau mobile monté sur l'axe et qui est tenu axialement sur le corps au moyen d'un pommeau en matière plastique fixé à l'extrémité dudit axe ;
- un ensemble de deux conducteurs électriques reliés respectivement audit axe et à la bague à linguets de manière que sous une action centripète du conducteur sur l'anneau mobile, celui-ci vienne appuyer sur les linguets élastiques de façon à établir le contact entre lesdits linguets et l'axe afin de commander l'ouverture de l'embrayage, les linguets pouvant se déplacer radialement d'une valeur égale à l'épaisseur de l'ensemble isolant.

Selon un mode de réalisation de l'invention, l'anneau mobile porte un roulement qui vient s'appliquer à l'extérieur et à l'extrémité des linguets et une rondelle de réglage est disposée entre le corps et le roulement de façon à permettre le tarage de l'anneau mobile.

Selon un mode de réalisation de l'invention la poignée contactante comporte un actionneur rotatif d'une boîte de gammes PV-GV, qui est monté à l'extérieur du corps avec un système de billage et de butée.

La présente invention offre ainsi l'avantage d'avoir une poignée contactante qui soit précise, et qui conserve l'affichage voulu quelque soit les conditions de roulage et le style de conduite du chauffeur.

D'autres caractéristiques et avantages de la présente invention ressortiront de la description qui suit le mode de réalisation donné à titre d'exemple en référence aux dossiers annexés sur lesquels :

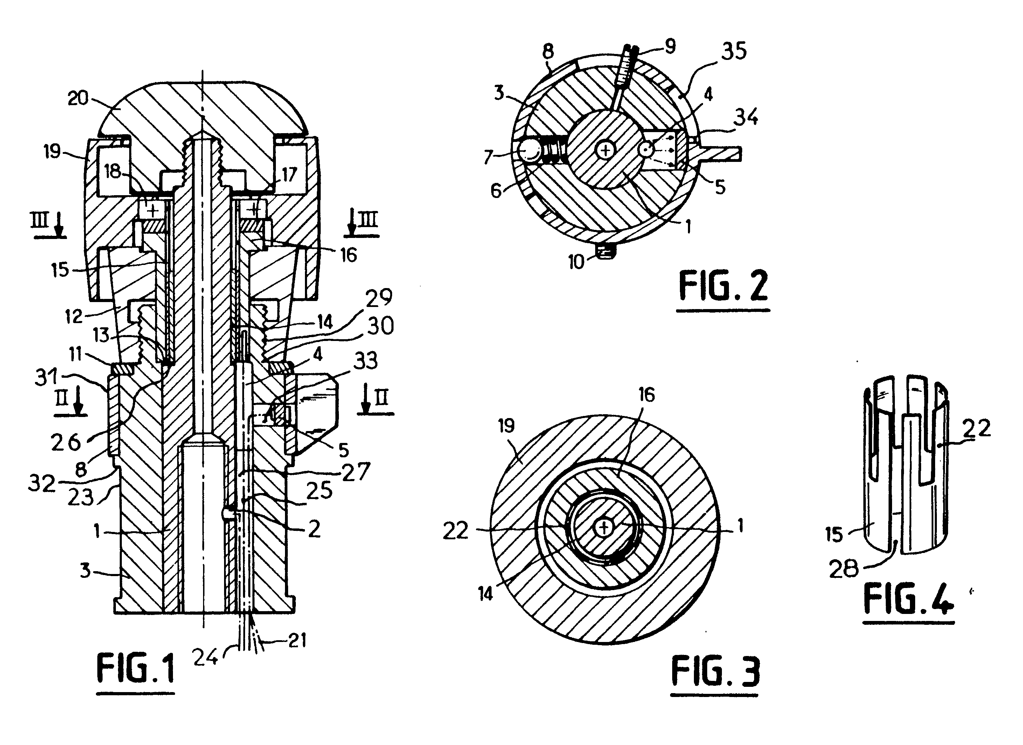

- la figure 1 est une vue en coupe axiale de l'ensemble de la poignée contactante selon l'invention ;
- la figure 2 est une coupe selon II de la figure 1 ;
- la figure 3 est une coupe selon III de la figure 1 ;
- la figure 4 est une vue en perspective de la bague à linguets représentée en coupe sur la figure 1.

La poignée contactante d'un levier de vitesses selon l'invention comporte :
- un axe 1 rigide métallique, un anneau mobile 19 et un ensemble de deux conducteurs électriques 24 et 25.

L'axe 1 est solidaire du levier de vitesses au moyen d'un trou fileté aménagé à la partie inférieure dudit axe 1, de façon à recevoir l'extrémité filetée dudit levier. L'axe 1 coopère avec une bague à linguet 15 métallique montée à son extrémité par l'intermédiaire d'un ensemble isolant, qui laisse les linguets 22 libres radialement. Cet ensemble isolant est constitué par une bague isolante 14 et une rondelle isolante 13. La rondelle isolante 13 vient s'appuyer sur un décrochement 26 de l'axe 1, et la bague isolante 14 se monte sur l'extrémité de l'axe 1. Cette bague isolante 14 reçoit la bague à linguets 15, et sa longueur est inférieure à la longueur de ladite bague a linguets 15 d'une valeur, qui permette aux linguets 22 d'avoir la souplesse voulue.

L'axe 1 est monté dans un corps référencé 23 dans son ensemble, qui est en deux parties : un corps inférieur 3 et un corps supérieur 12. Le corps inférieur 3 possède une extrémité filetée 29 avec un décrochement 30. Le corps supérieur 12 vient se visser sur l'extrémité filetée 29 du corps inférieur 3, et se bloque contre le décrochement 30.

Un fourreau 16 en métal se monte sur la bague à linguets 15, et se loge dans le corps inférieur 3 et dans le corps supérieur 12. Ce fourreau 16 s'appuie sur le corps supérieur 12 au moyen d'un épaulement.

La bague à linguets 15 a une fente 28 sur toute sa longueur, de manière à ce qu'elle soit élastique et qu'après son montage, elle vienne se plaquer contre le fourreau 16.

L'anneau mobile 19 est monté sur l'axe 1, et il est tenu dans le sens axial sur le corps supérieur 12 au moyen d'un pommeau 20 en matière plastique, qui est fixé à l'extrêmité dudit axe 1 en se vissant sur l'extrêmité filetée 39 de cet axe.

L'anneau mobile 19 porte un roulement 18 qui vient s'appliquer à l'extérieur et à l'extrémité des linguets 22. Une rondelle 17 de réglage est disposé entre l'épaulement du fourreau 16 et le roulement 18, de façon a autoriser un tarage de l'anneau mobile 19.

Le conducteur électrique 24 est relié à l'axe 1 et le conducteur électrique 25 est relié à la bague à linguets 15, de manière que sous une action centripète du conducteur sur l'anneau mobile 19, ce dernier vienne, s'appuyer sur les linguets 22 élastiques de façon à établir le contact entre lesdits linguets 22 et l'axe 1, ce qui permet de commander l'ouverture de l'embrayage. Les linguets 22 peuvent se déplacer radialement d'une valeur égale à l'épaisseur de la bague isolante 14.

Le conducteur électrique 25 est relié à la bague à linguets 15, par l'intermédiaire du fourreau 16 en métal sur lequel ladite bague vient se plaquer. Le conducteur électrique 25 est tenu par une fiche mâle 4 isolée et montée dans un logement 27, qui est aménagé sur la périphérie de l'axe 1 et, dans le corps inférieur 3 et parallèlement à l'axe 1.

Le conducteur électrique 24 est relié à l'axe 1 par une vis serre-cosse 2, qui est montée radialement dans cet axe 1. Ce conducteur est monté dans le logement 27.

La poignée selon 11 invention comporte également un actionneur rotatif référencé 31 dans son ensemble. Cet actionneur rotatif 31 agit sur une boîte de gammes petites vitesses et grandes vitesses PV-GV ; et il est constitué d'un anneau 8 et d'un contacteur relais 5.

L'anneau 8 est monté à l'extérieur et à la partie supérieure du corps inférieur 3. Il est guidé par une collerette 32 du corps inférieur 3 et par une rondelle 11 de guidage.

Cette rondelle 11 s'appuie sur un décrochement du corps inférieur 3, et le corps supérieur 12 vient se bloquer sur ladite rondelle.

Le contacteur relais 5 est disposé dans un logement 33 radial du corps inférieur 3, et il coopère avec un index 34 qui est associé à une lumière 35 de l'anneau 8. Les fils 21 du circuit du contacteur relais 5 sont disposés dans la fiche mâle 4 isolée et dans le logement 27 du conducteur 25 de la bague à linguets 15.

L'actionneur rotatif 31 comporte un billage et une butée. Le brillage est constitué par une bille 7 et avec un ressort 6, qui sont logés radialement dans le corps inférieur 3, et qui coopèrent avec deux trous 36 aménagés dans l'anneau 8 ce qui permet d'afficher la position de chacune des deux gammes : petites vitesses et grandes vitesses.

La butée est constitué par une vis 9, qui est montée dans le corps inférieur 3, et qui coopère avec une lumière 37 aménagée dans l'anneau 8.

L'anneau 8 est muni d'une oreille 38 qui facilite la préhension de l'actionneur rotatif 31.

Une vis pointeau 10 permet de solidariser le corps 23 avec l'axe 1.

**Revendications**

1°) Poignée contactante d'un levier de boîte de vitesses, caractérisé en ce qu'elle comporte :
- un axe (1) rigide métallique solidaire du levier, et qui coopère avec une bague à linguets (15) métallique montée à son extrémité par l'intermédiaire d'un ensemble isolant laissant les linguets (22) libres radialement, ledit axe (1) étant monté dans un corps (23) en matière plastique ;
- un anneau mobile (19) monté sur l'axe (1) et qui est tenu axialement sur le corps (23) au moyen d'un pommeau (20) en matière plastique fixé à l'extrémité dudit axe (1) ;
- un ensemble de deux conducteurs électriques (24, 25) reliés respectivement audit axe (1) et à la bague à linguets (15) de manière que sous une action centripète du conducteur sur l'anneau mobile (19), celui-ci vienne appuyer sur les linguets (22) élastiques de façon à établir le contact entre lesdits linguets (22) et l'axe (1) afin de commander l'ouverture de l'embrayage, les linguets (22) pouvant se déplacer radialement d'une valeur égale à l'épaisseur de l'ensemble isolant.

2°) Poignée contactante selon la revendication 1, caractérisée en ce que l'ensemble isolant comporte une bague isolante (14) et une rondelle isolante (13) ladite rondelle isolante (13) venant s'appuyer sur un décrochement (26) de l'axe (1), et ladite bague isolante (14) se montant sur l'extrémité de l'axe (1) de manière à recevoir la vague à linguets (15) sa longueur étant inférieure à celle de la bague à linguets (15) d'une valeur qui permette aux linguets (22) d'avoir la souplesse voulue.

3°) Poignée contactante selon la revendication 1, caractérisée en ce que le conducteur électrique (25) relié à la bague à linguets (15) comprenne un fourreau (16) en métal venant sur la bague à linguets (15) en se logeant dans le corps et en s'appuyant sur ledit corps, ledit fourreau (16) recevant l'extrémité du conducteur électrique (25) tenu par une fiche mâle (4) isolée montée dans un logement (27) aménagé sur la périphérie de l'axe (1) et dans le corps (23) et parallèlement à l'axe (1).

4°) Poignée contactante selon la revendication 1 caractérisée en ce que le conducteur électrique (24) relié à l'axe (1) comprend une vis serre-cosse (2) montée radialement dans le ledit axe (1) et se monte dans le logement (27).

5°) Poignée contactante selon la revendication 3 caractérisée en ce que la bague à linguets (15) est fendue sur toute sa longueur de manière à être élastique pour qu'après son montage, elle vienne se plaquer contre le fourreau (16).

6°) Poignée contactante selon la revendication 1 caractérisée en ce que l'anneau mobile (19) porte un roulement (18) qui vient s'appliquer à l'extérieur et à l'extrémité des linguets (22).

7°) Poignée contactante selon les revendications 3 et 6 caractérisée en ce qu'une rondelle (17) de réglage est disposée entre le fourreau (16) et le roulement (18) de façon à permettre un tarage de l'anneau mobile (19).

8°) Poignée contactante selon la revendication 1 caractérisée en ce que le corps est en deux parties : un corps inférieur (3) et un corps supérieur (12), le corps inférieur (3) ayant une extrémité filetée (29) avec un décrochement (30) sur lequel vient se visser le corps supérieur (12), qui se bloque contre le décrochement (30).

9°) Poignée contactante selon ta revendication 8, caractérisée en ce qu'elle comporte un actionneur rotatif (31) d'une boîte de gammes PV - GV, qui est constituée :
- d'un anneau (8) monté à l'extérieur et à la partie supérieure du corps inférieur (3), où il est guidé par une collerette (32) dudit corps inférieur (3) et par une rondelle (11) de guidage sur laquelle se vient se bloquer le corps supérieur (12),
- et d'un contacteur relais (5) disposé dans un logement (33) radial du corps inférieur (3) et coopérant avec un index (34) associé à une lumière (35) de l'anneau (8).

10°) Poignée contactante selon les revendications 9 et 3, caractérisée en ce que les fils (21) du circuit du contacteur relais (5) sont disposés dans la fiche mâle (4) isolée et dans le logement (27) du conducteur (25) de la bague à linguets (15).

11°) Poignée contactante selon la revendication 9, caractérisée en ce que l'actionneur rotatif (31) comporte un billage constitué par une bille (7) et un ressort (6) logés radialement dans le corps inférieur (3) et qui coopèrent avec deux trous (36) aménagés dans l'anneau (8) de manière à afficher la position de chacune des deux gammes.

12°) Poignée contactante selon la revendication 9, caractérisé en ce que l'actionneur rotatif (31) comporte une butée constituée par une vis (9) montée dans le corps inférieur (3) et coopérant avec une lumière (37) aménagée dans l'anneau (8).

13°) Poignée contactante selon la revendication 9, caractérisée en ce que l'anneau (8) comporte une oreille (38) facilitant la préhension de l'actionneur rotatif (31).

14°) Poignée contactante selon la revendication 1, caractérisée en ce que le pommeau (20) vient se visser sur l'extrémité filetée (39) dudit axe (1).

FIG.1

FIG.2

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 426 971 (AUTOMOBILES PEUGEOT ET SOCIETE ANONYME AUTOMOBILES CITROEN) * le document en entier * | 1 | B 60 K  20/02 G 05 G   9/04 H 01 H  25/00 |
| A | FR-A-2 390 305 (NAUCHNO ISSLEDOVATELSKY AVTOMOBILY I AVTOMOTORNY INSTITUT-NAMI, PROIZVODSTENNOE OBIEDIENENIE "IZHMASH" ET ZAPOROZHSKY AVTOMOBILNY ZAVOD "KOMMUNAR") * page 3, ligne 16 - page 4, ligne 12; page 5, lignes 8-19; figures 2,8 * | 1 | |
| A | FR-A-2 165 474 (ZAHNRADFABRIK FRIEDRICHSHAFEN AG) * le document en entier * | 1 | |
| A | US-A-2 622 711 (R. CHAMBONNEAU) * colonne 3, lignes 17-57; figure 2 * | 1 | |

| DOMAINES TECHNIQUES RECHERCHES (Int. Cl.5) |
|---|
| B 60 K  20/00 G 05 G   9/00 H 01 H  25/00 |

Le présent rapport a été établi pour toutes les revendications

| Lieu de la recherche | Date d'achèvement de la recherche | Examinateur |
|---|---|---|
| BERLIN | 03-08-1990 | RUPPERT W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)